# EUROPÄISCHE PATENTANMELDUNG

(11) **EP 3 988 284 A1**
(43) Veröffentlichungstag der Anmeldung: **27.04.2022**
(21) Anmeldenummer: 20203875.8
(22) Anmeldetag: 26.10.2020
(51) Int. Cl.: B29C 64/393, B22F 10/30, B22F 10/85, B22F 12/80, B29C 64/227, H02P 5/00

(54) **SYSTEM ZUR ANSTEUERUNG UND/ODER REGELUNG VON EINER MEHRZAHL AN MASCHINEN**

(71) Anmelder: Siemens Aktiengesellschaft, 80333 München (DE)
(72) Erfinder: Heuser, Karsten, 91056 Erlangen (DE); Jähnicke, Jens, 09112 Chemnitz (DE)

(57) **Zusammenfassung**

Die Erfindung betrifft ein System (1) zur Ansteuerung und/oder Regelung von einer Mehrzahl an Maschinen (Ml...Mn), mit wenigstens einer gemeinsamen Lizenzvergabeeinheit (2) und mit wenigstens einer Steuereinheit (Sl...Sm), wobei die Steuereinheit (Sl...Sm) zur Kommunikation mit mehreren Maschinen (Ml...Mn) ausgebildet ist, wobei die Steuereinheit (Sl...Sm) ein Datenpaket an eine Maschine oder mehrere Maschinen (Ml...Mn) übermittelt, wobei das Datenpaket eine Anweisung zur Durchführung einer Arbeitsaufgabe umfasst, wobei die Lizenzvergabeeinheit (2) eine zur Durchführung der Arbeitsaufgabe benötigte Lizenz bereitstellt. Die Erfindung betrifft ferner ein Verfahren zum Betrieb eines derartigen Systems (1).

## Beschreibung

Die Erfindung betrifft ein System zur Ansteuerung und/oder Regelung von einer Mehrzahl an Maschinen.

Typische Maschinenparks weisen eine Mehrzahl an Maschinen auf, wobei jeder Maschine eine Steuereinheit zugeordnet ist.

Aufgrund einer dadurch hohen Anzahl an benötigten Steuereinheiten ist dies sehr kostenintensiv und wenig effizient.

Der Erfindung liegt die Aufgabe zugrunde, einen Maschinenpark dahingehend zu verbessern.

Die Lösung der Aufgabe gelingt durch Anspruch 1, d.h. ein System zur Ansteuerung und/oder Regelung von einer Mehrzahl an Maschinen,
- mit wenigstens einer gemeinsamen Lizenzvergabeeinheit und
- mit wenigstens einer Steuereinheit, wobei die Steuereinheit zur Kommunikation mit mehreren Maschinen ausgebildet ist, wobei die Steuereinheit ein Datenpaket an eine Maschine oder mehrere Maschinen übermittelt, wobei das Datenpaket eine Anweisung zur Durchführung einer Arbeitsaufgabe umfasst, wobei die Lizenzvergabeeinheit eine zur Durchführung der Arbeitsaufgabe benötigte Lizenz bereitstellt.

Vorteilhaft ist hierbei der Einsatz einer oder mehrerer leistungsfähiger Steuereinheiten, welche zur Ansteuerung und/oder Regelung einer Vielzahl von Maschinen bzw. Anlagen ausgebildet ist bzw. sind.

Vorteilhaft ist hierbei eine Anordnung als Array mit einer m:n-Beziehung. Dies ist in den Figuren genauer dargestellt.

Ein Verzicht auf eine 1:1-Zuordnung von Steuereinheit und Maschine verbessert eine Dynamik sowie eine Auslastung des Systems.

In einer vorteilhaften Ausführungsform führt die Steuereinheit wenigstens einen Rechenschritt zur Ermittlung der Anweisung für die Maschine und/oder für die Maschinen aus. Ein Rechenschritt ist beispielsweise, eine G-Code-Vorerarbeitung, eine Interpolation, eine Regelung und/oder Ansteuerung von Achsen der Maschine oder eine andersartige administrative Aufgabe.

In einer vorteilhaften Ausführungsform ist das System derart ausgebildet, dass dem Rechenschritt eine Kennung zuweisbar ist. Dies ist vorteilhaft, da dadurch während einer seriellen Abarbeitung im Steuerungsprozess ein Rechenschritt einer einzelnen Maschine zuordenbar ist. Auf diese Weise kann bestimmt werden, für welche Maschine der Rechenschritt bestimmt ist. Vorzugsweise beinhaltet die Kennung eine Codierung, welche eine Beziehung von Rechenschritt und Maschine aufweist.

In einer vorteilhaften Ausführungsform sind die Steuereinheit bzw. die Mehrzahl an Steuereinheiten, die Maschine bzw. die Maschinen und die Lizenzvergabeeinheit kommunikativ, insbesondere über ein Bussystem verbunden.

Besonders gut eignen sich hierzu Bussysteme wie z. B. Profi-Net mit Industrial Real Time Ethernet (IRT). Auch andere sind möglich.

Ferner ist eine Kommunikation mittels Ethernet möglich.

Es ist zudem möglich, dass die Steuereinheit bzw. die Mehrzahl an Steuereinheiten, die Maschine bzw. die Maschinen und die Lizenzvergabeeinheit drahtlos bzw. kabellos miteinander kommunizieren.

Dies gelingt z. B. mittels Bluetooth, WLAN, ZigBee, NFC, Wibree oder WiMAX.

Zudem ist eine Kommunikation über Funk, insbesondere Mobilfunk, möglich. Hierbei eignen sich die Mobilfunkstandards 4G und/oder 5G besonders gut.

Auch Mischformen sind denkbar.

In einer vorteilhaften Ausführungsform ist eine Steuereinheit für eine Ausführung eines definierten Rechenschritts aus einer Anzahl an Rechenschritten oder einer Mehrzahl an definierten Rechenschritten aus der Anzahl an Rechenschritten ausgebildet.

Die Steuereinheit kann hierzu mittels optimierter Hard- und/oder Software auf eine bestimmte Aufgabe spezialisiert ausgebildet sein.

In einer vorteilhaften Ausführungsform sind die Mehrzahl an Steuereinheit derart ausgebildet, dass nach Ermittlung einer aktuellen Auslastung der Steuereinheiten eine Ausführung des Rechenschritts bzw. der Rechenschritte durch die Steuereinheit bzw. die Steuereinheiten an die aktuelle Auslastung angepasst, dynamisch erfolgt.

Dies bedeutet in anderen Worten, dass Rechenschritte arbeitsteilig, je nach aktueller Auslastung der Steuereinheit, durchgeführt werden. Hierbei kann eine Mehrzahl an baugleichen Steuereinheiten angeordnet sein.

In einer vorteilhaften Ausführungsform weist die Maschine eine Datenbereitstellungseinheit auf, wobei die Datenbereitstellungseinheit zur Bereitstellung von maschinenspezifischen Daten an die Steuereinheit ausgebildet ist.

Für eine korrekte Abarbeitung von Rechenschritten hat vorteilhaft jede Steuereinheit Zugriff auf die maschinenspezifischen Daten.

In einer vorteilhaften Ausführungsform weist die Maschine einen Kommunikationshub auf oder ist mit einen Kommunikationshub verbunden, wobei der Kommunikationshub zur gebündelten Weitergabe von maschinenspezifischen Daten ausgebildet ist.

Dies ist vorteilhaft, da dadurch eine Kommunikationslast verringert wird und somit eine Überlast des Bussystems verhindert wird. Ferner wird dadurch auch eine Echtzeitfähigkeit des Systems gesichert, da die Übermittlung von Datenpaketen nicht verzögert wird.

In einer vorteilhaften Ausführungsform ist die Lizenzvergabeeinheit zur Bereitstellung von Floating-Lizenzen ausgebildet.

Eine Floating-Lizenz ist vorteilhaft für eine Mehrzahl an Maschinen verfügbar. Vorteilhaft ist eine Mehrzahl an Floating-Lizenzen in einem Lizenzpool zusammengefasst. Hierfür wird meist eine Pauschalgebühr berechnet.

Die Maschine bzw. die für die Maschine zuständige Steuereinheit nutzt die Lizenz, die sie gerade benötigt. Die Maschine bzw. die für die Maschine zuständige Steuereinheit kann vorteilhaft jede Lizenz aus dem Lizenzpool verwenden, benötigt in den meisten Fällen jedoch nicht jede Lizenz.

In einer vorteilhaften Ausführungsform ist die Lizenzvergabeeinheit zur Bereitstellung von Pay per Use-Lizenzen ausgebildet.

Pay per Use-Lizenzen ermöglichen eine Abrechnung gemäß einer Inanspruchnahme der Leistung. Dies bedeutet, dass nur für eine tatsächlich verwendete Lizenz bezahlt wird.

Die Maschine bzw. die für die Maschine zuständige Steuereinheit nutzt die Lizenz, die sie gerade benötigt. Es wird auch nur diese Lizenz bezahlt.

In einer vorteilhaften Ausführungsform ist wenigstens eine Maschine, vorzugsweise eine Mehrzahl an Maschinen, zur Herstellung eines dreidimensionalen Gegenstands mittels additiver Fertigung ausgebildet. Eine Maschine ist vorzugsweise ein 3D-Drucker.

Die Maschine ist vorteilhaft zur Ausführung einer oder mehrerer 3D-Druckverfahren ausgebildet. Zu diesen zählen z. B. Freistrahl-Bindemittelauftrag, Materialauftrag mit gerichteter Energieeinbringung, Materialextrusion, Freistrahl-Materialauftrag, pulverbettbasiertes Schmelzen, Schichtlaminierung und badbasierte Photopolymerisation. Auch andere Verfahren sind möglich.

Die Lösung der oben gestellten Aufgabe gelingt ferner durch Anspruch 13, d.h. ein Verfahren zum Betrieb eines derartigen Systems, wobei wenigstens von einer Steuereinheit ein Datenpaket an eine Maschine oder mehrere Maschinen übermittelt wird, wobei durch das Datenpaket die Maschine bzw. die Maschinen zur Durchführung einer Arbeitsaufgabe angewiesen wird bzw. werden, wobei durch die Lizenzvergabeeinheit eine zur Durchführung der Arbeitsaufgabe benötigte Lizenz bereitgestellt wird.

In einer vorteilhaften Ausführungsform wird durch die Steuereinheit wenigstens ein Rechenschritt zur Ermittlung der Anweisung für die Maschine und/oder für die Maschinen ausgeführt.

In einer vorteilhaften Ausführungsform wird der Maschine bzw. den Maschinen wenigstens ein Sollwert für wenigstens einen Aktor übermittelt.

Ein Aktor ist hierbei ein Bauelement das elektrische Signale in mechanische Bewegung oder in andere physikalische Größen umsetzt. Aktoren sind beispielsweise Achsen der Maschine, Heizelemente, Extruder, Vorschubachsen. Auch andere Aktoren sind möglich.

Die Erfindung bietet den Vorteil, dass einfache Maschinen kostengünstig zu einem Maschinenpark vereint werden können. Die Infrastruktur ermöglicht zudem ein echtzeitfähiges System. Die Erfindung ist zudem von Vorteil, da Zeit und Kosten für Updates, insbesondere Firmware Updates, gespart werden können.

Ferner können Lizenzkosten optimiert werden.

Im Folgenden wird die Erfindung anhand der in den Figuren dargestellten Ausführungsbeispiele näher beschrieben und erläutert. Es zeigen:
- FIG 1: das erfindungsgemäße System zur Ansteuerung und/oder Regelung von einer Mehrzahl an Maschinen,
- FIG 2: beispielhaft einen Aufbau innerhalb der Steuereinheit,
- FIG 3: ein Verfahren zum Betrieb eines derartigen Systems.

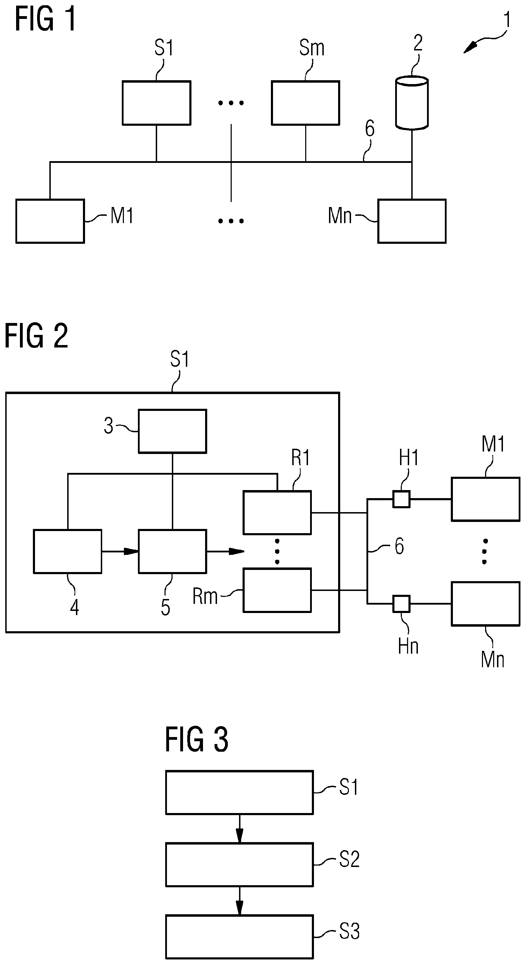

FIG 1 zeigt das erfindungsgemäße System zur Ansteuerung und/oder Regelung von einer Mehrzahl an Maschinen M1,...,Mn.

Das System 1 weist eine gemeinsame Lizenzvergabeeinheit 2 und wenigstens eine Steuereinheit S1 auf. Vorteilhaft ist eine Mehrzahl an Steuereinheiten S1,...,Sm vorhanden. Die Steuereinheit S1 ist derart ausgebildet, dass ein Datenpaket an eine Maschine M1 oder mehrere Maschinen M1,...,Mn übermittelbar ist.

Das Datenpaket umfasst eine Anweisung zur Durchführung einer Arbeitsaufgabe. Die Lizenzvergabeeinheit 2 stellt eine zur Durchführung der Arbeitsaufgabe benötigte Lizenz bereit. Die Steuereinheit S1 bzw. die Mehrzahl an Steuereinheiten S,...,Sm, die Maschine M1 bzw. die Mehrzahl an Maschinen M1,...,Mn und die Lizenvergabeeinheit 2 sind vorzugsweise kommunikativ, insbesondere über ein Bussystem 6, verbunden.

Die Erfindung ermöglicht, dass eine oder mehrere leistungsfähige Steuereinheiten eine Vielzahl von Maschinen steuern. Dies gelingt vorteilhaft mittels einer m:n-Beziehung.

Eine Kommunikation kann sowohl über einen gemeinsamen Bus (als Bussystem 6 dargestellt) als auch über einen direkten Bus (nicht dargestellt) zwischen einer Steuereinheit S1 bzw. mehreren Steuereinheiten Sl...Sm und einer Maschine M1 bzw. mehreren Maschinen Ml...Mn erfolgen.

FIG 2 zeigt beispielhaft einen Aufbau innerhalb der Steuereinheit S1.

In der Figur ist gezeigt, dass die Steuereinheit S1 zur Ausführung von Rechenschritten einen Administrations-Block 3, einen G-Code-Verarbeitungsblock 4 sowie ein Interpolations-Block 5 aufweist. Ferner beinhaltet die Steuereinheit 1 wenigstens einen, vorzugsweise eine Mehrzahl an Regelungs-Blöcken R1,...,Rm. Zwischen den Blöcken 3,4,5, R1,...,Rm liegt eine kommunikative Verbindung vor.

Die Figur zeigt ferner, dass die Mehrzahl an Maschinen M1,..,Mn, je einen Kommunikationshub H1,...,Hn aufweist oder mit einem Kommunikationshub H1,...,Hn verbunden ist. Der Kommunikationshub H1,...,Hn ist zur gebündelten Weitergabe von maschinenspezifischen Daten ausgebildet.

Maschinenspezifische Daten sind beispielsweise Daten, die eine Maschineneigenschaft beschreiben, wie beispielsweise ein Referenzpunkt, Achsenverstärkungsfaktoren, Dynamikeinstellungen oder eine Maximalgeschwindigkeit der Achse. Ferner sind maschinenspezifische Daten auch Istwerte der Maschine, wie beispielsweise Temperatur, Achsenposition oder andere Sensorwerte.

In einer Steuereinheit Sl...Sm sind vorteilhaft Daten von mehreren Maschinen Ml...Mn vorhanden.

Während der Inbetriebnahme entstehende maschinenspezifische Daten können z. B. in einem Inbetriebnahmearchiv gespeichert werden.

Die Steuereinheiten Sl...Sm können mittels optimierter Hard- und Software auf bestimmte Aufgaben spezialisiert sein. So könnte z. B. eine erste Steuereinheit eine G-Code-Vorverarbeitung durchführen, eine zweite Steuereinheit eine Interpolation, eine dritte Steuereinheit eine Regelung und/oder Ansteuerung von Achsen und eine vierte für administrative Aufgaben.

Dies ist vorteilhaft, da z. B. nicht alle Teileprogramme die gleiche Rechenleistung zur Erhaltung der Performance benötigen.

Angepasst an eine Rechenlast können auch mehrere Steuereinheiten Sl...Sm den gleichen Rechenschritt arbeitsteilig durchführen.

Damit, insbesondere während einer seriellen Abarbeitung im Steuerungsprozess, die Rechenschritte wieder den Maschinen Ml...Mn zugeordnet werden können, weist vorzugsweise jeder Rechenschritt eine Kennung auf. Diese Kennung gibt vorteilhaft an, für welche Maschine Ml...Mn der Rechenschritt bestimmt ist.

Um eine korrekte Abarbeitung der Rechenschritte zu gewährleisten, wird vorzugsweise jedem Steuerungsprozess bzw. jeder Steuereinheit Zugriff auf die maschinenspezifischen Daten der einzelnen Maschinen gewährt.

Insbesondere zu Regelungszwecken ist es von Vorteil, wenn z. B. die Steuereinheit S1 auf jede Achse einzeln zugreifen kann. Um eine dadurch hervorgerufene Kommunikationslast zu verringern, ist ein Kommunikationshub pro Maschine Ml...Mn von Vorteil.

Ferner ist es denkbar, bei ähnlichen oder gleichen Maschinen Informationen über ähnliche Achsen gebündelt zu übermitteln.

FIG 3 zeigt ein Verfahren zum Betrieb eines derartigen Systems. In einem Verfahrensschritt S1 wird wenigstens von einer Steuereinheit ein Datenpaket an eine Maschine oder mehrere Maschinen übermittelt. In einem Verfahrensschritt S2 wird durch das Datenpaket die Maschine bzw. die Maschinen zur Durchführung einer Arbeitsaufgabe angewiesen. In einem Verfahrensschritt S3 wird durch die Lizenzvergabeeinheit eine zur Durchführung der Arbeitsausgabe benötigte Lizenz bereitgestellt.

Vorteilhaft wird durch die Steuereinheit wenigstens ein Rechenschritt zur Ermittlung der Anweisung für die Maschine bzw. für die Maschinen ausgeführt. Dies gelingt bevorzugt vor dem Verfahrensschritt S1.

Vorteilhaft wird der Maschine bzw. den Maschinen wenigstens ein Sollwert für wenigstens einen Aktor übermittelt.

Vorteilhaft werden bei einer Interpolation für wenigstens eine Achse, vorzugsweise für alle Achsen einer Maschine, Sollwerte berechnet.

Vorteilhaft werden von der Maschine Istwerte wenigstens einer Achse, vorzugsweise aller Achsen, zur Steuereinheit übertragen.

Vorteilhaft wird aus den Sollwerten und den Istwerten in einem Regelalgorithmus für jede Achse der Maschine ein neuer Steuerwert berechnet. Dieser wird vorteilhaft an die Maschine übertragen.

Zwischen der Maschine und der Steuereinheit werden also vorteilhaft zyklisch Istwerte und Steuerwerte ausgetauscht.

Auf der Steuereinheit werden vorteilhaft mit dem Istwert und dem Sollwert neue Steuerwerte berechnet.

Auf der Maschine werden vorteilhaft von den Achsen die Steuerwerte angewendet und neue Istwerte erfasst.

Aufgrund der Vielzahl an Achsen in einem Maschinenpark wird sehr häufig und parallel der Regelalgorithmus durchlaufen. Daher ist beispielsweise eine Graphikkarte geeignet, diese Berechnungen durchzuführen.

## Patentansprüche

1. System (1) zur Ansteuerung und/oder Regelung von einer Mehrzahl an Maschinen (M1...Mn),
- mit wenigstens einer gemeinsamen Lizenzvergabeeinheit (2) und
- mit wenigstens einer Steuereinheit (Sl...Sm), wobei die Steuereinheit (S1...Sm) zur Kommunikation mit mehreren Maschinen (Ml...Mn) ausgebildet ist, wobei die Steuereinheit (Sl...Sm) ein Datenpaket an eine Maschine oder mehrere Maschinen (Ml...Mn) übermittelt, wobei das Datenpaket eine Anweisung zur Durchführung einer Arbeitsaufgabe umfasst, wobei die Lizenzvergabeeinheit (2) eine zur Durchführung der Arbeitsaufgabe benötigte Lizenz bereitstellt.

2. System (1) nach Anspruch 1, wobei die Steuereinheit (Sl...Sm) wenigstens einen Rechenschritt zur Ermittlung der Anweisung für die Maschine und/oder für die Maschinen (Ml...Mn) ausführt.

3. System (1) nach einem der vorhergehenden Ansprüche, derart ausgebildet, dass dem Rechenschritt eine Kennung zuweisbar ist.

4. System (1) nach einem der vorhergehenden Ansprüche, wobei das System (1) eine Mehrzahl an Steuereinheiten (Sl...Sm) aufweist.

5. System (1) nach einem der vorhergehenden Ansprüche, wobei die Steuereinheit bzw. die Mehrzahl an Steuereinheiten (S1...Sm), die Maschine bzw. die Maschinen (Ml...Mn) und die Lizenzvergabeeinheit (2) kommunikativ, insbesondere über ein Bussystem (6), verbunden sind.

6. System (1) nach einem der vorhergehenden Ansprüche, wobei eine Steuereinheit (Sl...Sm) für eine Ausführung eines definierten Rechenschritts aus einer Anzahl an Rechenschritten oder einer Mehrzahl an definierten Rechenschritten aus der Anzahl an Rechenschritten ausgebildet ist.

7. System (1) nach einem der vorhergehenden Ansprüche, wobei die Mehrzahl an Steuereinheiten (Sl...Sm) derart ausgebildet sind, dass nach Ermittlung einer aktuellen Auslastung der Steuereinheiten (S1...Sm) eine Ausführung des Rechenschritts bzw. der Rechenschritte (=Steuerung und Regelung) durch die Steuereinheit bzw. die Steuereinheiten (Sl...Sm) an die aktuelle Auslastung angepasst dynamisch erfolgt.

8. System (1) nach einem der vorhergehenden Ansprüche, wobei die Maschine (M1...Mn) eine Datenbereitstellungseinheit aufweist, wobei die Datenbereitstellungseinheit zur Bereitstellung von maschinenspezifischen Daten an die Steuereinheit (Sl...Sm) ausgebildet ist.

9. System (1) nach einem der vorhergehenden Ansprüche, wobei die Maschine (Ml...Mn) einen Kommunikationshub (Hl...Hn) aufweist oder mit einem Kommunikationshub (Hl...Hn) verbunden ist, wobei der Kommunikationshub (Hl...Hn) zur gebündelten Weitergabe von maschinenspezifischen Daten ausgebildet ist.

10. System (1) nach einem der vorhergehenden Ansprüche, wobei die Lizenzvergabeeinheit (2) zur Bereitstellung von Floating-Lizenzen ausgebildet ist.

11. System (1) nach einem der vorhergehenden Ansprüche, wobei die Lizenzvergabeeinheit (2) zur Bereitstellung von Pay per Use-Lizenzen ausgebildet ist.

12. System (1) nach einem der vorhergehenden Ansprüche, wobei wenigstens eine Maschine (Ml...Mn), vorzugsweise eine Mehrzahl an Maschinen, zur Herstellung eines dreidimensionalen Gegenstands mittels additiver Fertigung ausgebildet ist.

13. Verfahren zum Betrieb eines Systems (1) nach einem der Ansprüche 1 bis 12, wobei wenigstens von einer Steuereinheit (S1...Sm) ein Datenpaket an eine Maschine oder mehrere Maschinen (Ml...Mn) übermittelt wird, wobei durch das Datenpaket die Maschine bzw. die Maschinen (Ml...Mn) zur Durchführung einer Arbeitsaufgabe angewiesen wird bzw. werden, wobei durch die Lizenzvergabeeinheit (2) eine zur Durchführung der Arbeitsaufgabe benötigte Lizenz bereitgestellt wird.

14. Verfahren nach Anspruch 13, wobei durch die Steuereinheit (Sl...Sm) wenigstens ein Rechenschritt zur Ermittlung der Anweisung für die Maschine und/oder für die Maschinen (Ml...Mn) ausgeführt wird.

15. Verfahren nach einem der Ansprüche 13 oder 14, wobei der Maschine bzw. den Maschinen (Ml...Mn) wenigstens ein Sollwert für wenigstens einen Aktor übermittelt wird.
